# EUROPEAN PATENT APPLICATION

(11) **EP 1 705 166 A2**
(43) Date of publication of application: **27.09.2006**
(21) Application number: 06250217.4
(22) Date of filing: 16.01.2006
(51) Int. Cl.: C04B 41/89, C23C 28/04, F01D 5/28

(54) **Protective layer for barrier coating for silicon-containing substrate and process for preparing same**

(30) Priority: 21.03.2005 US 83970
(71) Applicant: GENERAL ELECTRIC COMPANY, Schenectady, NY 12345 (US)
(72) Inventor: Govern, Christine, Cincinati, Ohio 45242 (US); Hazel, Brian Thomas, West Chester, Ohio 45069 (US); Spitsberg, Irene, Loveland, Ohio 54140 (US)
(74) Representative: Pedder, James Cuthbert

(57) **Abstract**

An article comprising a silicon-containing substrate (30), a steam-resistant barrier coating (42) overlaying the substrate (30), wherein the steam-resistant barrier coating (42) comprises an outer barrier layer (66) consisting essentially of an alkaline earth silicates/aluminosilicate, and a corrosion resistant metal silicate protective layer overlaying and adjacent to the outer barrier layer (66). A process is also provided for forming on the outer barrier layer (66) the corrosion resistant metal silicate protective layer.

## Description

This invention broadly relates to a corrosion resistant metal silicate protective layer for a steam-resistant barrier coating overlaying a silicon-containing substrate. This invention further broadly relates to a process for forming this protective layer on the steam-resistant barrier coating overlaying this silicon-containing substrate.

Higher operating temperatures for gas turbine engines are continuously sought in order to improve their efficiency. Ceramic materials containing silicon, such as those comprising silicon carbide (SiC) as a matrix material and/or as a reinforcing material (e.g., as fibers) are currently being used for high temperature applications, such as gas turbine engines, heat exchangers, internal combustion engines, etc. These silicon-containing matrix/reinforcing materials are commonly referred to as ceramic matrix composites (CMCs). With regard to gas turbine engines, CMCs have been used in various turbine components, including combustors, airfoils, etc. However, as operating temperatures increase, the high temperature durability of such CMC materials must also correspondingly increase.

In normal gas turbine engine operating environments, substrates comprising these silicon-containing CMCs can recede and lose mass when exposed to high temperature, aqueous environments. For example, when exposed to a lean combustion environment of approximately 1 atmosphere pressure of water vapor at 1200°C, silicon carbide can exhibit weight loss and recession at a rate of approximately 6 mils (152 microns) per 1000 hrs. This weight loss and recession is believed to involve volatilization of the protective silica scale (formed by oxidation of the silicon carbide surface) by reaction with water vapor, as represented by the following equation:

SiO₂ + 2H₂O = Si(OH)₄

The silica scale formed on the CMC substrate can provide an excellent diffusion barrier to prevent further diffusion of oxygen. Indeed, in some coating systems utilized to protect the underlying silicon carbide in the CMC substrate, this silica scale can be formed deliberately as a protective layer by preoxidation of the substrate. However, as described above, this silica scale layer can deteriorate in the presence of water or water vapor such as steam to form volatile species of silicon such as Si(OH)₄. It is the loss of these volatile silicon species that cause recession and mass loss of the CMC substrate.

Various environmental barrier coating (EBC) systems have been suggested for protecting silicon-containing CMCs from oxidation at high temperatures and degradation in the presence of aqueous environments. These include EBCs comprising mullites (3Al₂O₃.2SiO₂) disclosed in, for example, commonly-assigned U.S. Pat. No. 6,129,954 (Spitsberg et al), issued October 10, 2000, and U.S. Pat. No. 5,869,146 (McCluskey et al), issued February 9, 1999. However, mullite does not provide adequate protection in high aqueous temperature environments because mullite has, thermodynamically, significant silica activity due to the high concentration of SiO₂ in mullite that volatilizes at high-temperatures in the presence of water or water vapor.

Other EBC systems suggested for protecting silicon-containing CMCs include those comprising barium strontium aluminosilicate (BSAS), with or without mullite, and with or without additional thermal barrier coatings such as those disclosed in, for example, commonly-assigned U.S. Pat. No. 5,985,470 (Spitsberg et al), issued November 16, 1999; U.S. Pat. No. 6,444,335 (Wang et al), issued September 3, 2002; U.S. Pat. No. 6,607,852 (Spitsberg et al), issued August 19, 2003; and U.S. Patent No. 6,410,148 (Eaton et al), issued June 25, 2002. However, EBCs comprising BSAS may not be sufficiently resistant to other forms of environmental attack.

Accordingly, it would be desirable to be able to provide an environmental barrier coating for silicon-containing CMC substrates that: (a) provides protection against high temperature aqueous environments, such as steam; and (b) is resistant to environmental attack by other types of environmental contaminant compositions and corrosive agents.

An embodiment of this invention is broadly directed at an article comprising a silicon-containing substrate; a steam-resistant barrier coating overlaying the substrate, wherein the steam resistant-barrier coating comprises an outer barrier layer consisting essentially of an alkaline earth silicate/aluminosilicate; and a corrosion resistant metal silicate protective layer overlaying and adjacent to the outer barrier layer.

Another embodiment of this invention is broadly directed at a process comprising the following steps (a) providing a silicon-containing substrate having an overlaying steam-resistant barrier coating comprising an outer barrier layer consisting essentially of an alkaline earth silicate/aluminosilicate; and (b) forming on the outer barrier layer a corrosion resistant metal silicate protective layer.

The article and method of this invention provide a number of advantages and benefits with regard to steam resistant-barrier coatings for silicon-containing substrates. The metal silicate protective layer provides corrosion resistance against other forms of environmental attack, especially that caused by environmental contaminant compositions and corrosive agents that can be formed from sulfates and/or chlorides of calcium, magnesium, sodium, etc., or mixtures thereof (e.g., from sea salt), as well as oxides of calcium, magnesium, etc., or mixtures thereof. The corrosion resistant metal silicate protective layer can also be formed on the outer barrier layer of the steam-resistant barrier coating by the use of conventional coating methods such as thermal spray techniques, physical vapor deposition techniques, etc.

The invention will now be described in greater detail, by way of example, with reference to the drawings, in which:-
FIG. 1 is a perspective view of a turbine blade for which the corrosion resistant metal silicate protective layer and barrier coating of this invention is useful.
FIG. 2 is an enlarged sectional view through the airfoil portion of the turbine blade of FIG. 1, taken along line 2-2, showing an embodiment of the corrosion resistant metal silicate protective layer and barrier coating of this invention overlaying the substrate of the airfoil portion.

As used herein, the term "steam resistant-barrier coating" refers to coatings that can provide a protective barrier for the underlying silicon-containing substrate against environmental attack caused by high temperature, aqueous environments (e.g., steam). The steam resistant-barrier coatings of this invention comprise an outer barrier layer consisting essentially of an alkaline earth silicate/aluminosilicate, plus one or more optional layers.

As used herein, the term "barrier layer consisting essentially of an alkaline earth silicate/aluminosilicate" refers to a barrier layer that is resistant to environmental attack caused by high temperature, aqueous environments (e.g., steam) and which consists essentially of an alkaline earth silicate/aluminosilicate, e.g., comprises at least about 90% of an alkaline earth silicate/aluminosilicate, typically at least about 95% of an alkaline earth silicate/aluminosilicate, and more typically at least about 99% of an alkaline earth silicate/aluminosilicate.

As used herein, the term "alkaline earth aluminate/aluminosilicate" refers to alkaline earth aluminate (also referred to as "AEAs"), alkaline earth aluminosilicates (also referred to as "AEASs"), or combinations thereof. These alkaline earth silicate/aluminosilicates typically comprise alkaline earth aluminates, alkaline earth aluminosilicates or combinations thereof, wherein the alkaline earth is barium, strontium, or more typically a mixture thereof. The AEASs typically comprise barium strontium aluminosilicates (also referred to as "BSASs"). Usually, the BSASs comprise from about 0.00 to about 1.00 moles BaO, from about 0.00 to about 1.00 moles SrO, about 1.00 moles Al₂O₃ and about 2.00 moles SiO₂, wherein the combined moles of BaO and SrO is about 1.00 mole. Typically, the BSASs comprise from about 0.10 to about 0.90 moles (more typically from about 0.25 to about 0.75 moles) BaO, from about 0.10 to about 0.90 moles (more typically from about 0.25 to about 0.75 moles) SrO, about 1.00 moles Al₂O₃ and about 2.00 moles SiO₂, wherein the combined moles of BaO and SrO is about 1.00 moles. One such BSAS comprises about 0.75 moles BaO, about 0.25 moles SrO, about 1.00 moles Al₂O₃ and about 2.00 moles SiO₂. See U.S. Pat. No. 6,410,148 (Eaton et al.), issued June 25, 2002, especially column 3, lines 6-25, the relevant portions of which are herein incorporated by reference.

As used herein, the term "corrosion resistant metal silicate protective layer" refers to protective layers of this invention that comprise a sufficient amount or level of a corrosion resistant metal silicate to protect the steam-resistant barrier coating, and especially the outer barrier layer consisting essentially of an alkaline earth silicate/aluminosilicate, against environmental attack caused by sulfates and/or chlorides of calcium, magnesium, sodium, etc., or mixtures thereof (e.g., from sea salt), or by oxides of calcium, magnesium, etc., or mixtures thereof, such as a contaminant composition comprising mixed calcium-magnesium-aluminum-silicon-oxide systems (Ca--Mg--Al--SiO), that are commonly referred to as "CMAS." See, for example, U.S. Pat. No. 5,660,885 (Hasz et al), issued August 26, 1997, which describes these CMAS environmental contaminant compositions. The corrosion resistant metal silicate protective layer can comprise at least about 50% of a corrosion resistant metal silicate, typically at least about 80% of a corrosion resistant metal silicate, and more typically 99% of a corrosion resistant metal silicate.

As used herein, the term "corrosion resistant metal silicate" refers to a metal silicate that is at least resistant to environmental attack caused by sulfates and/or chlorides of calcium, magnesium, sodium, etc., or mixtures thereof (e.g., from sea salt), or by oxides of calcium, magnesium, etc., or mixtures thereof (e.g., from CMAS). These metal silicates can also be resistant to environmental attack caused by other environmental contaminant compositions and corrosive agents, including high temperature, aqueous environments (e.g., steam), etc. Suitable corrosion resistant metal silicates for use herein can include yttrium silicates, scandium silicates, zirconium silicates, hafnium silicates, rare earth metal silicates such as lanthanum silicates, cerium silicates, praseodymium silicates, neodymium silicates, promethium silicates, samarium silicates, europium silicates, gadolinium silicates, terbium silicates, dysprosium silicates, holmium silicates, erbium silicates, thulium silicates, ytterbium silicates, lutetium silicates, etc., as well as various combinations of these metal silicates. The metal silicates can be in the form of a monosilicate, a disilicate, an orthosilicate, a metasilicate, a polysilicate, etc., or combinations thereof. Typically, the corrosion resistant metal silicate is a yttrium silicate, a scandium silicate, a lutetium silicate, a ytterbium silicate, a zirconium silicate, a hafnium silicate, or a combination thereof, and more typically a yttrium silicate or a lutetium silicate.

As used herein, the term "silicon-containing substrate" refers to any silicon-containing-substrate, including those comprising silicon-containing ceramic materials, silicon metal alloys (also referred to as "metal silicides"), or combinations of such silicon-containing ceramic materials and silicon metal alloys. The silicon-containing substrate can comprise a substantially continuous matrix of silicon-containing materials, can be a composite comprising a continuous matrix of silicon-containing materials reinforced with discrete elements such as fibers, particles, etc. dispersed, embedded, etc., in the continuous matrix, etc. The discrete elements such as fibers, particles, etc., can be formed from silicon-containing ceramic materials, or can be formed from other materials, e.g., carbon fibers. Such combinations of dispersed, embedded, etc., fibers, particles, etc., in a continuous matrix of silicon-containing ceramics are typically referred to as ceramic matrix composites or CMCs. Typical CMCs comprise a continuous silicon-containing ceramic matrix that is fiber reinforced, usually with silicon-based fibers. These reinforcing fibers typically include a coating material that fully covers the fiber surfaces to impart and maintain structural integrity of the composite material systems. Typical fiber coating materials include boron nitride, silicon nitride, silicon carbide, carbon, etc. Suitable silicon-containing ceramic materials include silicon carbide, silicon nitride, silicon carbide nitride, silicon oxynitride, silicon aluminum oxynitride, etc., or combinations thereof. Suitable silicon metal alloys useful as silicon-containing substrates include molybdenum-silicon alloys (molybdenum silicides), niobium-silicon alloys (niobium silicides), iron-silicon alloys (iron silicides), etc, or combinations thereof. Illustrative silicon-containing substrates suitable for use herein include silicon carbide coated silicon carbide fiber-reinforced silicon carbide particles and a silicon matrix, a carbon fiber-reinforced silicon carbide matrix, a silicon carbide fiber-reinforced silicon nitride matrix, etc.

As used herein, the term "thermal barrier coating" refers to those coatings that reduce heat flow to the corrosion resistant metal silicate protective layer, steam-resistant barrier coating, silicon-containing substrate, etc., of the article, i.e., form a thermal barrier, and which comprise ceramic materials have a melting point that is typically at least about 2600°F (1426°C), and more typically in the range of from about 3450° to about 4980°F (from about 1900° to about 2750°C). Suitable ceramic materials for thermal barrier coatings include, aluminum oxide (alumina), i.e., those compounds and compositions comprising Al₂O₃, including unhydrated and hydrated forms, various zirconias, in particular phase-stabilized zirconias (e.g., zirconia blended with various stabilizer metal oxides such as yttrium oxides), such as yttria-stabilized zirconias, ceria- stabilized zirconias, calcia-stabilized zirconias, scandia-stabilized zirconias, magnesia-stabilized zirconias, india-stabilized zirconias, ytterbia-stabilized zirconias, etc., as well as mixtures of such stabilized zirconias. See, for example, Kirk-Othmer's Encyclopedia of Chemical Technology, 3rd Ed., Vol. 24, pp. 882-883 (1984) for a description of suitable zirconias. Suitable yttria-stabilized zirconias can comprise from about 1 to about 20% yttria (based on the combined weight of yttria and zirconia), and more typically from about 3 to about 10% yttria. These phase-stabilized zirconias can further include one or more of a second metal (e.g., a lanthanide or actinide) oxide such as dysprosia, erbia, europia, gadolinia, neodymia, praseodymia, urania, and hafnia to further reduce thermal conductivity of the thermal barrier coating. See U.S. Pat. No. 6,025,078 (Rickerby et al), issued February 15, 2000 and U.S. Pat. No. 6,333,118 (Alperine et al), issued December 21, 2001. Suitable ceramic materials for thermal barrier coatings also include pyrochlores of general formula A₂B₂O₇ where A is a metal having a valence of 3+ or 2+ (e.g., gadolinium, aluminum, cerium, lanthanum or yttrium) and B is a metal having a valence of 4+ or 5+ (e.g., hafnium, titanium, cerium or zirconium) where the sum of the A and B valences is 7. Representative materials of this type include gadolinium-zirconate, lanthanum titanate, lanthanum zirconate, yttrium zirconate, lanthanum hafnate, cerium zirconate, aluminum cerate, cerium hafnate, aluminum hafnate and lanthanum cerate. See U.S. Pat. No. 6,117,560 (Maloney), issued September 12, 2000; U.S. Pat. No. 6,177,200 (Maloney), issued January 23, 2001; U.S. Pat. No. 6,284,323 (Maloney), issued September 4, 2001; U.S. Pat. No. 6,319,614 (Beele), issued November 20, 2001; and U.S. Pat. No. 6,387,526 (Beele), issued May 14, 2002.

As used herein, the term "comprising" means various compositions, compounds, components, coatings, substrates, layers, steps, etc., can be conjointly employed in this invention. Accordingly, the term "comprising" encompasses the more restrictive terms "consisting essentially of" and "consisting of."

All amounts, parts, ratios and percentages used herein are by weight unless otherwise specified.

This invention is based on the discovery that, while prior environmental barrier coating (EBC) systems can protect the underlying silicon-containing substrate of articles (e.g., gas turbine engine components) from certain types of environmental attack, primarily those caused high temperature aqueous environments (e.g., a hot steam environment), there are other environmental conditions that these prior EBC systems do not protect against or protect against poorly. For example, EBC systems comprising an outer barrier layer consisting essentially of an alkaline earth silicate/aluminosilicate such as barium strontium aluminosilicate (BSAS) that are protective against environmental attack caused by high temperature aqueous environments (e.g., steam) are still vulnerable to other forms of environmental attack. These other forms of environmental attack can be equally as detrimental as recession caused by hot aqueous (e.g., steam) environments.

Of particular concern are those environment attacks caused by sulfates and/or chlorides of calcium, magnesium, sodium, etc., or mixtures thereof (e.g., from sea salt), or by oxides of calcium, magnesium, etc., or mixtures thereof (e.g., from CMAS). At higher temperatures during engine operation, CMAS can adhere to the hot EBC surface comprising the outer BSAS layer, or in the case of sea salt, can be ingested into the engine with the air. It has been found that chemical and mechanical interactions can occur between CMAS and/or sea salt, and the outer BSAS layer in these EBC systems. In particular, these contaminant compositions have been found to interact with this outer BSAS layer so as to chemically alter the EBC, thus forming amorphous or glassy phases in the EBC when exposed to water vapor and creating open porous channels through the modified EBC, such that the protective capabilities of the EBC are compromised.

The corrosion resistant metal silicate protective layer of this invention solves these problems caused by other environmental contaminant compositions and corrosive agents such as sea salt and CMAS. In particular, the corrosion resistant metal silicate protective layer of this invention permits outer steam resistant-barrier layers that consist essentially of an alkaline earth aluminate/aluminosilicate such as BSAS to be included in barrier coatings overlaying silicon-containing substrates. Such outer steam resistant-barrier layers that consist essentially of an alkaline earth aluminate/aluminosilicate such as BSAS can be desirable for certain barrier coatings that comprise optional layers (e.g., mullite, combinations of mullite and BSAS, etc., with or without a silicon or silica scale underlayer) that are less resistant or not resistant at all to environmental attack caused by high temperature aqueous environments, but can provide other benefits to the barrier coating, including a better coefficient of thermal expansion (CTE) match with the underlying silicon-containing substrate. By improving the CTE match between the barrier coating and the underlying silicon-containing substrate, the barrier coating can be less prone to spallation problems.

The steam resistant-barrier coatings of this invention having a corrosion resistant metal silicate protective layer are useful with silicon-containing substrates used in a wide variety of turbine engine (e.g., gas turbine engine) parts and components operated at, or exposed to, high temperatures, especially higher temperatures that occur during normal engine operation. These turbine engine parts and components can include turbine airfoils such as turbine blades and vanes, turbine shrouds, turbine nozzles, combustor components such as liners, deflectors and their respective dome assemblies, augmentor hardware of gas turbine engines, etc. The steam resistant-barrier coatings of this invention having the corrosion resistant metal silicate protective layer are particularly useful for articles comprising silicon-containing substrates in the form of turbine blades and vanes, and especially the airfoil portions of such blades and vanes. However, while the following discussion of articles of this invention will be with reference to turbine blades and vanes, and especially the airfoil portions thereof, that comprise these blades and vanes, it should also be understood that the steam resistant-barrier coatings of this invention having the corrosion resistant metal silicate protective layer can be useful with other articles comprising silicon-containing substrates that require environmental barrier protection.

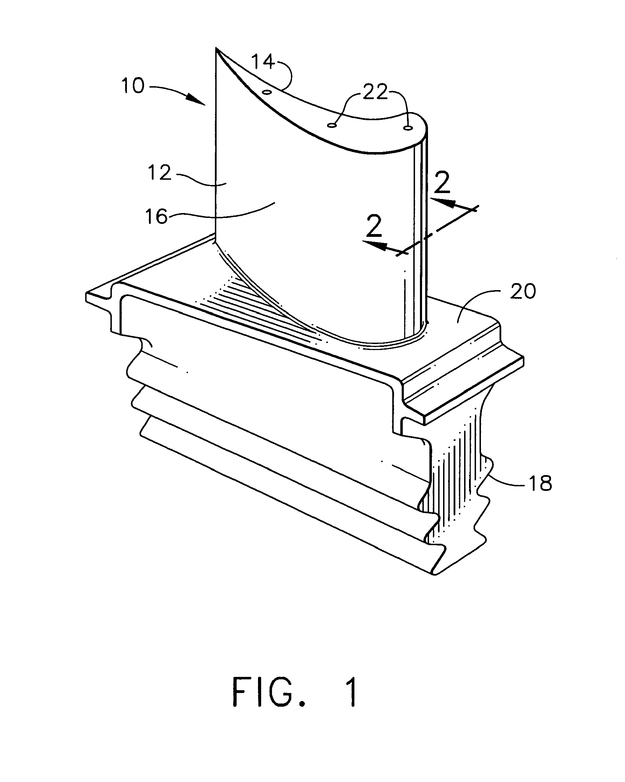

The various embodiments of this invention are further illustrated by reference to the drawings as described hereafter. Referring to the drawings, FIG. 1 depicts a component article of a gas turbine engine such as a turbine blade or turbine vane, and in particular a turbine blade identified generally as 10. (Turbine vanes have a similar appearance with respect to the pertinent portions.) Blade 10 generally includes an airfoil 12 against which hot combustion gases are directed during operation of the gas turbine engine, and whose surfaces are therefore subjected to severe attack by high temperature aqueous environments (e.g., steam), as well as other environmental contaminants such as sea salt or CMAS. Airfoil 12 has a "high-pressure side" indicated as 14 that is concavely shaped; and a suction side indicated as 16 that is convexly shaped and is sometimes known as the "low-pressure side" or "back side." In operation the hot combustion gas is directed against the high-pressure side 14. Blade 10 is anchored to a turbine disk (not shown) with a dovetail 18 formed on the root section 20 of blade 10. In some embodiments of blade 10, a number of internal passages extend through the interior of airfoil 12, ending in openings indicated as 22 in the surface of airfoil 12. During operation, a flow of cooling air is directed through the internal passages (not shown) to cool or reduce the temperature of airfoil 12.

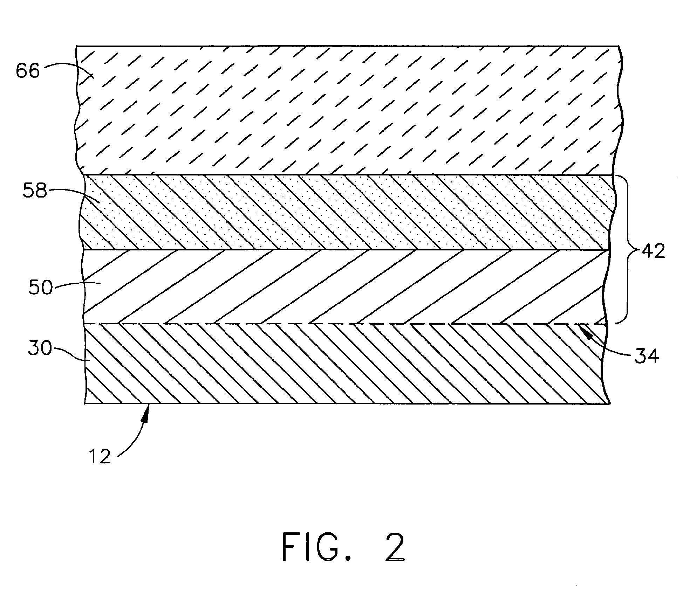

Referring to FIG. 2, the base material of airfoil 12 of blade 10 comprising the silicon-containing substrate is indicated generally as 30. Surface 34 of substrate 30 can be pretreated prior to forming the steam-resistant barrier coating thereon to remove substrate fabrication contamination (e.g., cleaning surface 34) to improve adherence thereto, to provide a protective or adherent improvement silica scale on surface 34, etc. For example, substrate 30 can be pretreated by subjecting surface 34 to a grit blasting step. This grit blasting step is typically carried out carefully in order to avoid damage to surface 34 of substrate 30 such as silicon carbide fiber reinforced CMC substrate. The particles used for the grit blasting should also be hard enough to remove the undesired contamination but not so hard as to cause significant erosive removal of substrate 30. The abrasive particles typically used in grit blasting are sufficiently small to prevent significant impact damage to surface 34 of substrate 30. When processing a substrate 30, for example, a silicon carbide CMC substrate, grit blasting is typically carried out with alumina particles, typically having a particle size of about 30 microns or less, and typically at a velocity of from about 150 to about 200 m/sec.

As shown in FIG. 2, adjacent to and overlaying surface 34 of substrate 30 is a steam-resistant barrier coating indicated generally as 42. An embodiment of such a barrier coating 42 is disclosed in commonly assigned U.S. Pat. No. 6,410,148 (Eaton et al), issued June 25, 2002, especially at col. 3, line 6 through col. 4, line 17. Referring to FIG. 2, barrier coating 42 can comprise an optional inner layer 50 that is adjacent to and overlays surface 34, typically to provide a bond layer to improve adherence of barrier coating 42 to substrate 30, to provide a protective silica scale layer, etc. This optional inner layer 50 typically has a thickness of from about 1 to about 10 mils (from about 25 to about 254 microns), more typically from about 3 to about 6 mils (from about 76 to about 152 microns). This optional inner layer 50 can comprise silicon to provide a bond layer, can comprise a silica scale to provide a protective and/or bond layer, etc. For example, it can be useful to preoxidize a small portion or fraction of the silicon-containing substrate 30 to form a protective silica scale inner layer 50. This preoxidized silica scale layer 50 can be formed, for example, by subjecting silicon-containing substrate 30 (e.g., a silicon-carbide substrate) to a temperature of from about 800° to about 1200°C for from about 15 minutes to about 100 hours.

As further shown in FIG. 2, barrier coating 42 can also comprise an optional intermediate layer indicated generally as 58 that is adjacent to and overlaying inner layer 50 and underlying outer barrier layer 66 (i.e., is between inner layer 50 and outer barrier layer 66), typically for the purpose or function of providing enhanced adhesion between outer barrier layer 66 and optional inner layer 50 or surface 34 of substrate 30. This intermediate layer 58 typically has a thickness of from about 0.5 to about 10 mils (from about 13 to about 254 microns), more typically from about 1 to about 4 mils (from about 25 to about 102 microns). This optional intermediate layer 50 can comprise, for example, silica, mullite, mullite-BSAS combinations, mullite-yttrium silicate combinations, mullite-calcium aluminosilicate combinations, silicon, etc., or combinations thereof. This optional intermediate layer 50 can consist essentially of mullite. However, because mullite tends to be cracked as the result of being applied by thermal spray techniques during formation of intermediate layer 50, intermediate layer 50 more typically comprises combinations of mullite with BSAS (mullite-BSAS), with yttrium silicate (mullite-yttrium silicate), with calcium aluminosilicate (mullite-calcium aluminosilicate), etc. For example, these combinations can comprise from about 40 to about 80% mullite, with from about 20 to about 60% BSAS, yttrium silicate, calcium aluminosilicate, etc. This optional intermediate layer 50 can be formed by the use of conventional coating methods such as thermal spray techniques, etc., as described hereafter for forming thermal barrier coatings.

As further shown in FIG. 2, barrier coating 42 further comprises an outer barrier layer indicated generally as 66 that is adjacent to and overlaying intermediate layer 58, typically for the purpose or function of providing protection against high temperature, aqueous environments (e.g., steam). This outer barrier layer 66 consists essentially of an alkaline earth aluminate/aluminosilicate (e.g., BSAS) and can have a thickness of at least about 0.5 mils (13 microns), and typically has a thickness of from about 3 to about 30 mils (from about 76 to about 762 microns), more typically from about 3 to about 5 mils (from about 76 to about 127 microns). This outer barrier layer 66 can be formed by the use of conventional coating methods such as thermal spray techniques, etc., as described hereafter for forming thermal barrier coatings

As further shown in FIG. 2, adjacent to and overlaying outer barrier layer 66 is a corrosion resistant metal silicate protective layer indicated generally as 74. This protective layer 74 can have any suitable thickness that provides protection to outer barrier layer 66 of barrier coating 42 against environmental attack by sea salt or CMAS, or other environmental contaminant compositions and corrosive agents. Protective layer 74 typically has a thickness of from about 1 to about 10 mils (from about 25 to about 254 microns), more typically from about 3 to about 5 mils (from about 76 to about 127 microns). This protective layer 74 can be formed on outer barrier layer 66 by the use of conventional coating methods such as thermal spray techniques, physical vapor deposition techniques, etc., as described hereafter for forming thermal barrier coatings, as well as slurry dip techniques, oxide bonding techniques, pack cementation techniques, etc.

As further shown in FIG. 2, an optional thermal barrier coating (TBC) indicated generally as 82 can be formed on or over protective layer 74, with or without an additional transition layer therebetween for CTE compatibility. This TBC 82 typically has a thickness of from about 1 to about 30 mils (from about 25 to about 769 microns), more typically from about 3 to about 20 mils (from about 75 to about 513 microns). TBC 82 can be formed on protective layer 74 by a variety of techniques. For example, TBC 82 can be formed on protective layer 74 by physical vapor deposition (PVD), such as electron beam PVD (EB-PVD), filtered arc deposition, or by sputtering. Suitable sputtering techniques for use herein include but are not limited to direct current diode sputtering, radio frequency sputtering, ion beam sputtering, reactive sputtering, magnetron sputtering and steered arc sputtering. PVD techniques can form TBCs 82 having strain resistant or tolerant microstructures such as vertical microcracked structures. EB-PVD techniques can form columnar structures that are highly strain resistant to further increase the coating adherence. See, for example, U.S. Pat. No. 5,645,893 (Rickerby et al), issued July 8, 1997 (especially col. 3, lines 36-63) and U.S. Pat. No. 5,716,720 (Murphy), issued February 10, 1998) (especially col. 5, lines 24-61), which disclose various apparatus and methods for applying TBCs by PVD techniques, including EB-PVD techniques.

An alternative technique for forming TBCs 82 is by thermal spray. As used herein, the term "thermal spray" refers to any method for spraying, applying or otherwise depositing TBC 82 that involves heating and typically at least partial or complete thermal melting of the ceramic material and depositing of the heated/melted ceramic material, typically by entrainment in a heated gas stream, onto protective layer 74. Suitable thermal spray deposition techniques include plasma spray, such as air plasma spray (APS) and vacuum plasma spray (VPS), high velocity oxy-fuel (HVOF) spray, detonation spray, wire spray, etc., as well as combinations of these techniques. A particularly suitable thermal spray deposition technique for use herein is plasma spray. Suitable plasma spray techniques are well known to those skilled in the art. See, for example, Kirk-Othmer Encyclopedia of Chemical Technology, 3rd Ed., Vol. 15, page 255, and references noted therein, as well as U.S. Pat. No. 5,332,598 (Kawasaki et al), issued July 26, 1994; U.S. Pat. No. 5,047,612 (Savkar et al) issued September 10, 1991; and U.S. Pat. No. 4,741,286 (Itoh et al), issued May 3, 1998 which describe various aspects of plasma spraying suitable for use herein, including apparatus for carrying out plasma spraying.

## Claims

1. An article (10) comprising:
a silicon-containing substrate (30);
a steam-resistant barrier coating (42) overlaying the substrate (30), wherein the steam resistant-intermediate barrier coating (42) comprises an outer barrier layer (66) consisting essentially of an alkaline earth silicates/aluminosilicate; and
a corrosion resistant metal silicate protective layer (74) overlaying and adjacent to the outer barrier layer (66).

2. The article (10) of claim 1 wherein the protective layer (74) has a thickness of from 25 to 254 microns.

3. The article of any of claims 1 to 2 wherein the alkaline earth silicates/aluminosilicate comprises a barium strontium aluminosilicate.

4. The article of any of claims 1 to 3 wherein the protective layer comprises at least 80 % corrosion resistant metal silicate.

5. The article of any of claims 1 to 4 wherein the corrosion resistant metal silicate comprises a yttrium silicate, a scandium silicate, ytterbium silicate, a zirconium silicate, a hafnium silicate, a rare earth metal silicate, or combination thereof.

6. The article of any of claims 1 to 5 wherein the corrosion resistant metal silicate comprises a yttrium silicate or a lutetium silicate.

7. The article of any of claims 1 to 6 wherein the steam-resistant barrier coating further comprises an inner layer overlaying and adjacent to the silicon-containing substrate, wherein the inner layer comprises silicon or a silica scale and has a thickness of from 76 to 152 microns.

8. The article of any of claims 1 to 7 wherein the steam-resistant barrier coating further comprises an intermediate layer between the inner layer and the outer barrier layer, the intermediate layer comprising silica, silicon, mullite, or a combination of mullite with a barium strontium aluminosilicate, a yttrium silicate, or a calcium aluminosilicate.

9. A process comprising the following steps:
(a) providing a silicon-containing substrate having an overlaying steam-resistant barrier coating comprising an outer barrier layer consisting essentially of an alkaline earth silicates/aluminosilicate; and
(b) forming on the outer barrier layer a corrosion resistant metal silicate protective layer.

10. The process of claim 9 wherein the protective layer has a thickness of from 76 to 127 microns and comprises at least 99% of a yttrium silicate or a lutetium silicate.
